# EUROPEAN PATENT APPLICATION

(11) **EP 4 571 526 A1**
(43) Date of publication of application: **18.06.2025**
(21) Application number: 23862972.9
(22) Date of filing: 25.08.2023
(51) Int. Cl.: G06F 13/42, G06F 13/38, G06F 15/173

(54) **PARALLEL AND DISTRIBUTED COMPUTING SYSTEM**

(30) Priority: 08.09.2022 JP 2022142713
(71) Applicant: Information Science Laboratory, Ltd., Niigata-shi, Niigata 950-2074 (JP); Nis Plus Co., Ltd., Tokyo 112-0002 (JP)
(72) Inventor: MATSUMOTO, Takashi, Niigata-shi, Niigata 950-2074 (JP)
(74) Representative: Isarpatent
(86) International application number: PCT/JP2023/030772
(87) International publication number: WO 2024/053433

(57) **Abstract**

In the present invention, a process (hereinafter, a transmission side process) of a transmission source computer 2X performs an operation request to an operation target process (hereinafter, a reception side process) that defines a process of a transmission destination computer 2Y, and transmits a plurality of operation request packets (hereinafter, an arrival order specified packet) that needs to arrive according to a transmission order, the transmission destination computer 2Y receives a plurality of the arrival order specified packets, and performs an operation defined for each of the arrival order specified packets in a case where the plurality of arrival order specified packets arrives according to the transmission order, the transmission side process further performs an operation request to the reception side process, and transmits a plurality of operation request packets (hereinafter, an out-of-order packet) that does not need to arrive according to a transmission order, and the transmission destination computer 2Y receives a plurality of the out-of-order packets, and performs an operation defined for each of the out-of-order packets regardless of an arrival order of the plurality of the out-of-order packets.

## Description

### Technical Field

The present invention relates to a parallel and distributed computing system in which a plurality of computers including a processor including a translation look-aside buffer (TLB), a physical memory, and a network interface controller (NIC) directly accessible to the physical memory is interconnected via single data link or multiple data links.

### Background Art

As described in Non Patent Literature 1, the inventor of the present application is developing a memory based communication facility (MBCF) that is one of communication and/or synchronization mechanisms based on a memory-based communication and/or synchronization scheme. This MBCF is a mechanism that does not require any special communication and/or synchronization hardware and uses a stock network interface card (NIC) to implement high-speed high-performance communication and/or synchronization with remote memory operations only by software.

Specifically, the MBCF is configured using a computer including a processor including a translation look-aside buffer (TLB), a physical memory, and a network interface controller (NIC) directly accessible to the physical memory. For example, a process (hereinafter, a transmission side process) of a transmission source computer transmits an operation request packet including an identifier of an operation target process (hereinafter, a reception side process) that defines a process of a transmission destination computer, an operation target address that defines a memory area of the reception side process, a data size to be written, and a data sequence. Then, the transmission destination computer receives the operation request packet transmitted by the transmission side process, and stores the data sequence in the memory area defined by the reception side process and the operation target address.

In particular, as disclosed in Patent Literature 1, the inventor of the present application has developed a system in which a plurality of computers is interconnected via multiple data links, and the plurality of computers performs communication and/or synchronization with each other by the MBCF. At this time, since there are multiple data links in each node (computer), although the load of the packets can be distributed to multiple data links, there may be a problem that an arrival order of the remote memory operation request packets is disturbed and the memory consistency is broken. Therefore, Patent Literature 1 proposes a mechanism that holds the memory consistency in a situation where there is a disturbance in the arrival order of the operation request packets.

### Citation List

### Non Patent Literature

Non Patent Literature 1: MATSUMOTO, Takashi: A Study on Memory-Based Communications and Synchronization in Distributed-Memory Systems. Dissertation Thesis, Graduate School of Science, Univ. of Tokyo (February 2001).

### Patent Literature

Patent Literature 1: WO 2021/251479 A

### Summary of Invention

### Technical Problem

By the way, in a typical implementation method of the MBCF, since there is no buffer for adjusting the arrival order of the packets in the transmission destination computer, even in the case of single data link in each node, when a operation request packet is lost, a large amount of retransmission of the previously transmitted operation request packets (subsequent packets of the lost packet) occurs before the arrival of the acknowledgement (Ack) from the request source, and a phenomenon in which performance is greatly reduced occurs.

Therefore, the present invention has been made to solve the above problems, and a main object thereof is to improve performance and suppress retransmission packets by relaxing a memory access order in a parallel and distributed computing system in which a plurality of computers including a processor including a translation look-aside buffer (TLB), a physical memory, and a network interface controller (NIC) directly accessible to the physical memory is interconnected via single data link or multiple data links.

### Solution to Problem

That is, a parallel and distributed computing system according to the present invention is a parallel and distributed computing system in which a plurality of computers including a processor including a translation look-aside buffer (TLB), a physical memory, and a network interface controller (NIC) directly accessible to the physical memory is interconnected via single data link or multiple data links, wherein a process (hereinafter, a transmission side process) of a transmission source computer performs an operation request to an operation target process (hereinafter, a reception side process) that defines a process of a transmission destination computer, and transmits a plurality of operation request packets (hereinafter, an arrival order specified packet) that needs to arrive according to a transmission order, the transmission destination computer receives a plurality of the arrival order specified packets, and performs an operation defined for each of the arrival order specified packets in a case where the plurality of arrival order specified packets arrives according to the transmission order, the transmission side process further performs an operation request to the reception side process, and transmits a plurality of operation request packets (hereinafter, an out-of-order packet) that does not need to arrive according to a transmission order, and the transmission destination computer receives a plurality of the out-of-order packets, and performs an operation defined for each of the out-of-order packets regardless of an arrival order of the plurality of the out-of-order packets.

With such a parallel and distributed computing system, the transmission side process can transmit the arrival order specified packets and the out-of-order packets, and the transmission destination computer performs the operation defined for each of the arrival order specified packets in a case where the plurality of arrival order specified packets arrives according to the transmission order, receives the plurality of out-of-order packets, and performs the operation defined for each of the out-of-order packets regardless of the arrival order of the plurality of out-of-order packets. Therefore, even in a state where there is no buffer for adjusting the arrival order of the packets in the transmission destination computer, it is possible to improve performance and suppress retransmission packets by relaxing the memory access order.

As a specific implementation aspect of the transmission side process, the transmission side process transmits a plurality of operation request packets (hereinafter, an out-of-order write packet) that includes an identifier of the reception side process, an operation target address that defines a memory area of the reception side process, a data size to be written, and a data sequence, and does not need to arrive according to a transmission order.

Then, the transmission destination computer receives a plurality of the out-of-order write packets, and stores the data sequence included in each of the out-of-order write packets in the memory area defined by the reception side process and the operation target address of each of the out-of-order write packets regardless of an arrival order of the plurality of out-of-order write packets.

Furthermore, as a specific implementation aspect of the transmission side process, the transmission side process transmits a plurality of operation request packets (hereinafter, an out-of-order read packet) that includes an identifier of the reception side process, an operation target address that defines a memory area of the reception side process, a data size to be read, and a data storage area address of the transmission side process, and does not need to arrive according to a transmission order.

Then, the transmission destination computer receives a plurality of the out-of-order read packets, reads a data sequence from the memory area defined by the reception side process and the operation target address of each of the out-of-order read packets regardless of an arrival order of the plurality of the out-of-order read packets, and returns the data sequence to a data storage area of the transmission side process.

In the parallel and distributed computing system of the present invention, in a case where there is an unarrived operation request packet at a time point of arrival of each of the operation request packets, the transmission destination computer transmits a retransmission request of the unarrived operation request packet to the transmission side process at a predetermined retransmission request timing.

As a specific aspect of the counting and processing of the out-of-order packets, the transmission source computer includes a transmission number counting unit that counts a number of transmissions of all the operation request packets to be transmitted to the transmission destination computer and attaches a count number before or after counting-up to the operation request packets, and the transmission destination computer includes: a reception number counting unit that counts a number of receptions of the operation request packets received from the transmission source computer; and an already-arrived packet information recording unit that records information of an out-of-order packet (hereinafter, an overtaking packet) that has arrived after overtaking unarrived operation request packets.

Then, in a case where a number of counts of the reception number counting unit and a number of counts attached to the out-of-order packet are continuous, the transmission destination computer performs processing of the out-of-order packet, and updates the number of counts of the reception number counting unit with the number of counts attached to the out-of-order packet.

Furthermore, the transmission destination computer performs processing of the overtaking packet, and records information of the overtaking packet in the already-arrived packet information recording unit without updating the number of counts of the reception number counting unit in a case where unarrived operation request packets are present and the overtaking packet (out-of-order packet) is received.

Moreover, the transmission destination computer receives the unarrived operation request packet, and at a time point when there is no missing of the operation request packets and the count number to the overtaking packet is continuous, the reception number counting unit adds the count number by a number up to the overtaking packet that has no unarrived earlier-sent packets, and the already-arrived packet information recording unit discards information of the overtaking packets that have no unarrived earlier-sent packets.

As a specific implementation aspect of the retransmission request for the unarrived operation request packets at the time of receiving the out-of-order packet in the transmission destination computer, in a case where information of the overtaking packet is recorded in the already-arrived packet information recording unit, the transmission destination computer transmits a retransmission request for the unarrived operation request packets to the transmission side computer every time a predetermined retransmission request time set by a timer elapses.

As a specific implementation aspect of the retransmission request of the unarrived operation request packet at the time of receiving the out-of-order packet in the transmission destination computer, the transmission destination computer transmits a retransmission request for the unarrived operation request packet to the transmission side computer at a time point when a predetermined number or more of information of the overtaking packets is recorded in the already-arrived packet information recording unit.

As a specific aspect of the counting and processing of the arrival order specified packet, in a case where the number of counts of the reception number counting unit and the number of counts attached to the arrival order specified packet are continuous, the transmission destination computer performs the arrival order specified packet, and updates the number of counts of the reception number counting unit by the number of counts attached to the arrival order specified packet.

Furthermore, in a case where the unarrived operation request packet is present, and the number of counts of the reception number counting unit and the number of counts attached to the arrival order specified packet are not continuous, the transmission destination computer delays processing of the arrival order specified packet of which the count number is not continuous, or discards the arrival order specified packet of which the count number is not continuous and waits for retransmission in a correct order by retransmission.

As a specific implementation aspect of the retransmission request for the unarrived operation request packet at the time of receiving the arrival order specified packet in the transmission destination computer, in a case where the number of counts of the reception number counting unit and the number of counts attached to the arrival order specified packet are not continuous, the transmission destination computer transmits a retransmission request for the unarrived operation request packet to the transmission side computer at a time point of determination of the case.

As a specific implementation aspect for identifying the arrival order specified packet and the out-of-order packet, the transmission side process sets identification information indicating that each of the operation request packets is an operation request packet that needs to arrive according to a transmission order within the arrival order specified packet, and sets identification information indicating that each of the operation request packets is an operation request packet that does not need to arrive according to a transmission order within the out-of-order packet, and the transmission destination computer identifies whether the operation request packet is the arrival order specified packet or the out-of-order packet on the basis of the identification information, and performs subsequent processing.

### Advantageous Effects of Invention

According to the present invention configured as described above, in a parallel and distributed computing system in which a plurality of computers is interconnected via single data link or multiple data links, and the plurality of computers performs communication and/or synchronization by MBCF with each other, it is possible to improve performance and suppress retransmission packets by relaxing the memory access order.

### Brief Description of Drawings

FIG. 1 is a diagram schematically illustrating an overall configuration of a parallel and distributed computing system according to an embodiment of the present invention.
FIG. 2 is a schematic diagram illustrating physical configurations of a transmission source computer and a transmission destination computer according to the embodiment.
FIG. 3 is a schematic diagram illustrating a use environment of MBCF_WRITE of the embodiment.
FIG. 4 is a schematic diagram illustrating an operation procedure of operation request packet transmission including a packet generation process on an operation request side according to the embodiment.
FIG. 5 is a schematic diagram illustrating a situation in which an operation request packet has arrived at a reception side node according to the embodiment.
FIG. 6 is a schematic diagram illustrating MBCF-related processing in a packet reception interruption routine in a reception side node of the embodiment.
FIG. 7 is a schematic diagram illustrating a transmission order and a reception execution order of an arrival order specified packet and an out-of-order packet according to the embodiment.
FIG. 8 is a functional block diagram of a computer according to the embodiment.
FIG. 9 is a functional block diagram of a computer according to a modified embodiment.

### Description of Embodiments

Hereinafter, a parallel and distributed computing system 100 according to an embodiment of the present invention will be described with reference to the drawings.

### <1. System configuration>

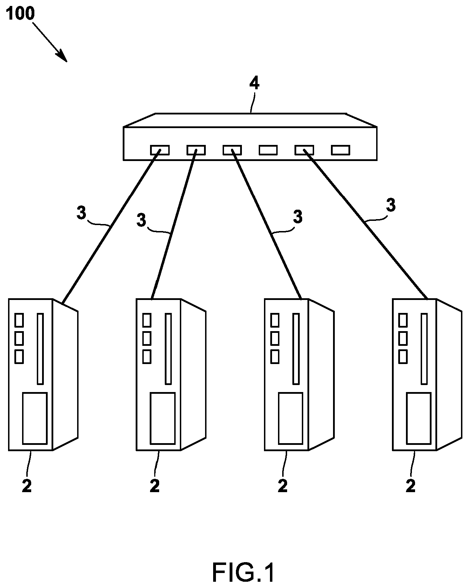

As illustrated in FIG. 1, the parallel and distributed computing system 100 of the present embodiment is obtained by connecting a plurality of computers 2 to each other via single data link or multiple data links 3 and a switching hub 4.

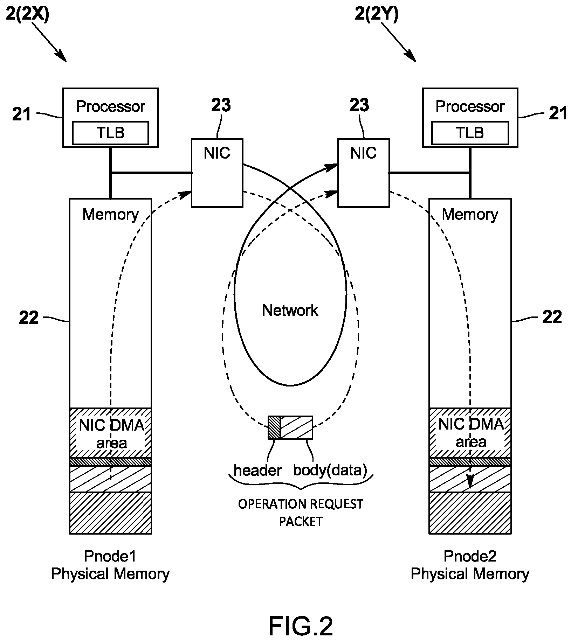

As illustrated in FIG. 2, each of the computers 2 includes a processor 21 including a translation look-aside buffer (TLB), a physical memory 22, and a network interface controller (NIC; network interface card) 23 directly accessible to the physical memory 22.

Then, the parallel and distributed computing system 100 does not require any special communication and/or synchronization hardware, but uses the stock network interface card (NIC) 23 to construct a memory-based communication facility (MBCF) that realizes high-speed, high-performance communication and/or synchronization through a remote memory operation using only software. Specifically, the parallel and distributed computing system 100 constructs the memory-based communication facility (MBCF) by an operating system (OS) stored in a kernel space of each of the computers 2.

The parallel and distributed computing system 100 has variations of various operation commands such as a write command (MBCF_WRITE) that performs remote memory writing, a read command (MBCF_READ) that performs remote memory reading, and a read-modify-write command (MBCF_SWAP) that performs remote memory read-modify-write operation described below.

For example, a process (hereinafter, a transmission side process) of a transmission source computer 2(2X) transmits an operation request packet including an identifier of a reception side process (hereinafter, a reception side process) that defines a process of a transmission destination computer 2(2Y), an operation target address that defines a memory area of the reception side process, a data size to be written, and a data sequence, and the transmission destination computer 2 receives the operation request packet and stores the data sequence in the memory area defined by the reception side process and the operation target address (MBCF_WRITE).

Furthermore, the transmission side process transmits an operation request packet including an identifier of an operation target process (hereinafter, a reception side process) that defines a process of the transmission destination computer 2(2Y), an operation target address that defines a memory area of the reception side process, a data size to be read, and a data storage area address of the transmission side process, and the transmission destination computer 2(2Y) receives the operation request packet, reads a data sequence from the memory area defined by the reception side process and the operation target address, and returns the data sequence to the data storage area of the transmission side process (MBCF_READ).

Moreover, the transmission side process transmits an operation request packet including an identifier of an operation target process (hereinafter, a reception side process) that defines a process of the transmission destination computer 2(2Y), an operation target address that defines a memory area of the reception side process, a data size to be written, a data sequence for read-modify-writing, and a data storage area address of the transmission side process, and the transmission destination computer 2(2Y) receives the operation request packet, reads a data sequence before writing from the memory area defined by the reception side process and the operation target address, overwrites the memory area with the data sequence for modify-writing, and returns the data sequence before writing read from the memory area to the data storage area of the transmission side process (MBCF_SWAP).

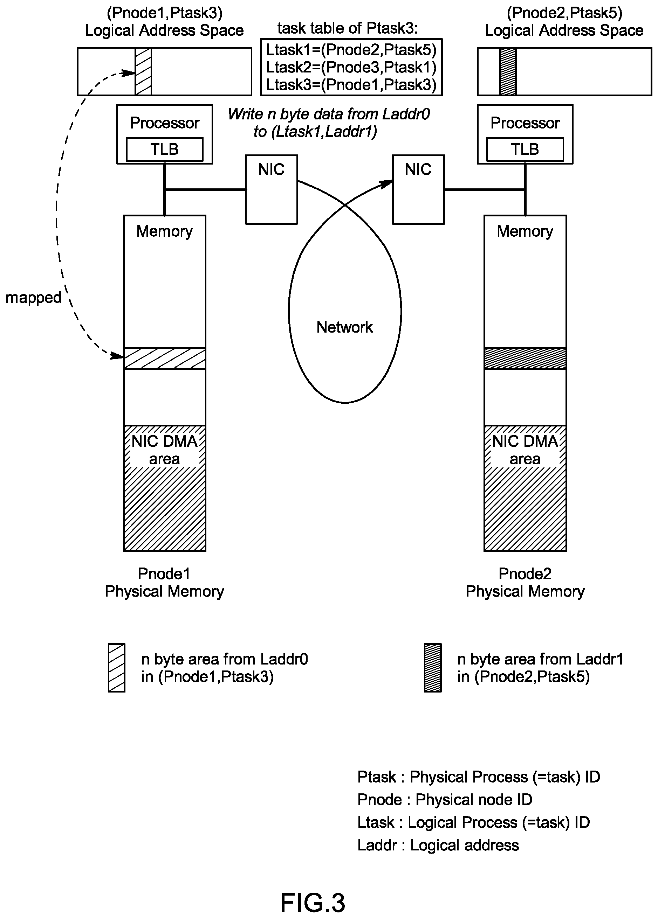

Here, the procedure of MBCF_WRITE will be described in detail with reference to FIGS. 3 to 6. Note that the basic procedure is common to other commands.

FIG. 3 illustrates a use environment of MBCF _WRITE, in which Pnode1 is a transmission source node (transmission source computer) of an operation request packet, and Pnode2 is a reception side node (transmission destination computer). A processor of the transmission source node creates a packet image including a header, in which delivery information is written, and a payload in a NIC DMA area of its own memory. The NIC DMA area memory can be directly accessed by a NIC for transmission or reception. When the generation of the packet image for transmission is completed, the processor instructs the NIC to start a transmission operation by DMA reading (a kick operation to start reading). The reception side node (Pnode2) includes a ring buffer for packets arriving in the NIC DMA area of its own memory. The NIC of the reception side node determines whether the packet is a packet addressed to its own node (normally, the determination is made by a MAC address), and generates a copy of the packet addressed to its own node in the ring buffer. The NIC then generates a hardware interruption to inform the processor of the reception side node of the arrival of the packet.

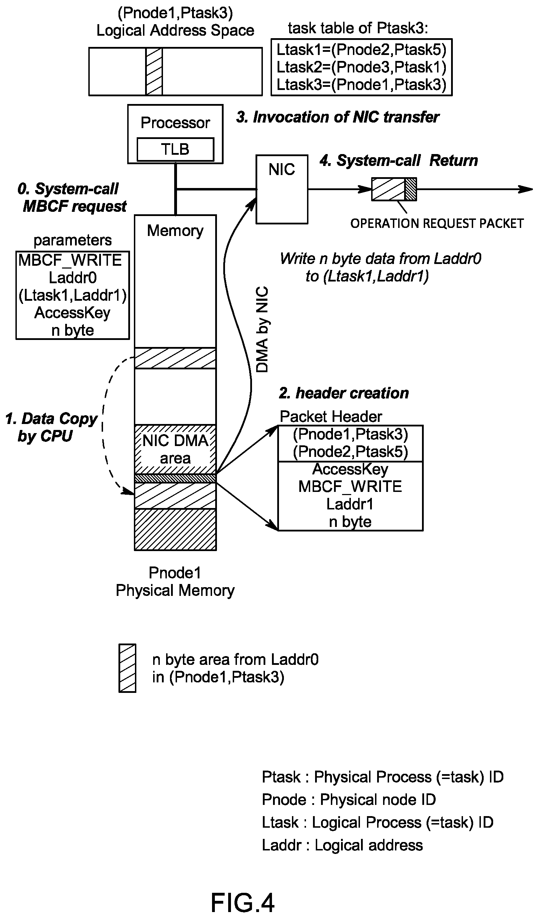

Next, with reference to FIG. 4, an operation procedure of operation request packet transmission including a packet generation process on the operation request side will be described.

In the transmission side process (request side task), parameters including an identifier [Ltask1] of the reception side process (request destination task), an operation target memory address [Laddr1] of the reception side process, an access key [AccessKey] for memory space operation of the reception side process, a command type [MBCF_WRITE] of the MBCF, a data size [n] for performing remote writing, and a pointer [Laddr0] to a head of an area storing data to be written are prepared. Then, an MBCF request transmission system call is called with these parameters. Upon receiving the system call, an OS refers to a task table of the transmission side process and converts a logical task ID indicating the reception side process into a physical task ID [(Pnode2, Ptask5)]. Since the physical task ID includes Pnode2 that is the physical node ID, from this information, route information (delivery destination information) to the reception side node can be set. If the network to be used is Ethernet, the MAC address is used as the delivery destination information. This delivery destination information enables the NIC to deliver the operation request packet to the reception side node. Then, the OS causes the NIC to transmit the operation request packet.

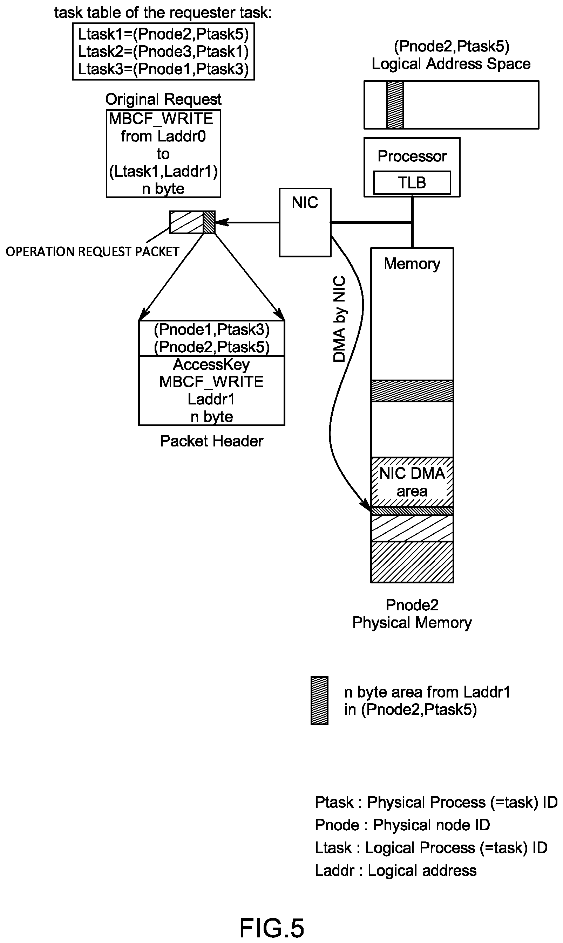

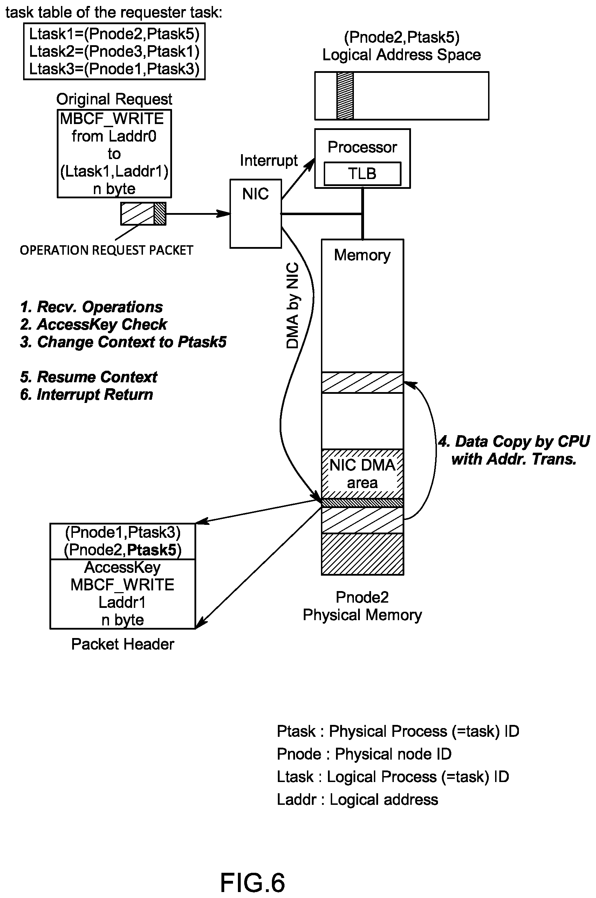

Next, a reception procedure of the operation request packet at the operation request destination will be described with reference to FIGS. 5 and 6.

FIG. 5 illustrates a situation in which the operation request packet arrives at the reception side node. The operation request packet is carried by the network to the reception side node [Pnode2]. Upon packet arrival, the NIC of the reception side node copies the data image of the operation request packet to the ring buffer by DMA, and then generates an interrupt signal to inform a processor of the reception side node that the packet has arrived.

FIG. 6 illustrates MBCF-related processing in a packet reception interruption routine in the reception side node. Due to the occurrence of the reception interruption from the NIC, the control of the processor of the reception side node is switched to a packet reception routine, and a low-level packet reception procedure required by the NIC is executed first. In the packet reception routine, first, a reception side process is specified from a physical task ID (Ptask5 in the drawing). Specifically, a pointer to a process structure of the process is obtained. Then, it is checked whether an AccessKey in the operation request packet matches that of the reception side process, and only in the case of a match, a memory operation in a memory space of the reception side process is allowed. In the case of a match, the context of the memory space is switched to that of the reception side process, and n-byte data carried in the operation request packet are written from the operation target logical address (Laddr1) by a store instruction as user privilege level instead of as supervisor privilege level. Then, the context of the memory space is returned to that at the time of occurrence of the interruption. The processing in the interrupt routine is completed up to this point.

### <In a case where relaxation of memory access order is effective>

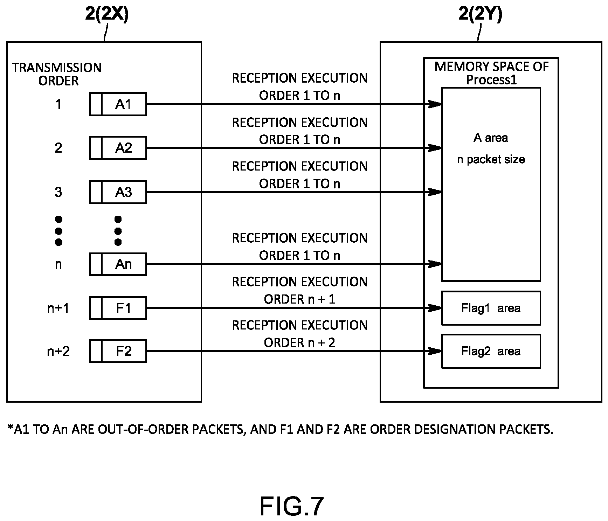

As illustrated in FIG. 7, the transmission side process of the transmission source computer 2(2X) transmits a plurality of operation request packets (hereinafter, arrival order specified packets (F1 and F2)) that need to arrive in a transmission order and a plurality of operation request packets (hereinafter, out-of-order packets (A1 to An)) that do not need to arrive in a transmission order. Note that, in FIG. 7, the out-of-order packets perform a memory operation of an area A (n packets) in a memory space of Task1 of the transmission destination computer 2.

Then, the transmission destination computer 2(2Y) receives the plurality of arrival order specified packets (F1 and F2), performs the operation defined for each of the arrival order specified packets (F1 and F2) only in a case where the plurality of arrival order specified packets (F1 and F2) arrives in a specified order, receives the plurality of out-of-order packets (A1 to An), and performs the operation defined for each of the out-of-order packets (A1 to An) regardless of an arrival order of the plurality of out-of-order packets (A1 to An).

The transmission side process sets, in the arrival order specified packets, identification information indicating that the operation request packets need to arrive according to the transmission order, and sets, in the out-of-order packets, identification information indicating that the operation request packets do not need to arrive according to the transmission order. In the present embodiment, each of the operation request packets includes 1-bit identification information indicating whether the packet is an out-of-order packet or an arrival order specified packet.

Then, when receiving the operation request packet, the transmission destination computer 2(2Y) identifies whether the packet is an arrival order specified packet or an out-of-order packet on the basis of the identification information, and performs subsequent processing according to each packet.

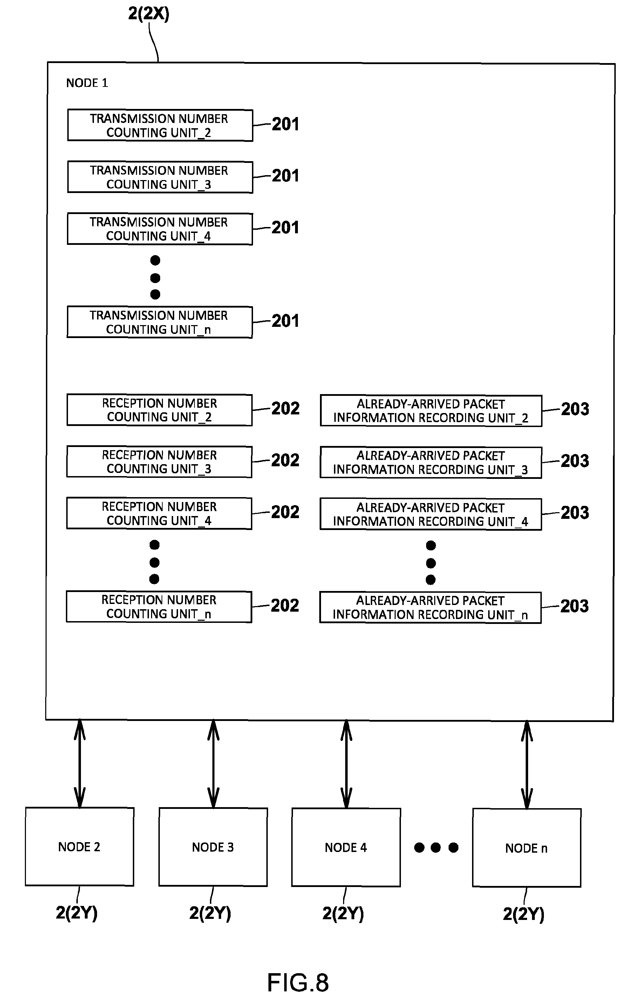

As illustrated in FIG. 8, the parallel and distributed computing system 100 according to the present embodiment includes a transmission number counting unit 201 that counts the number of transmissions of all the operation request packets transmitted from the transmission source computer 2(2X) to the transmission destination computer 2(2Y) and attaches the count number before or after the count-up of the operation request packets to the operation request packets.

Furthermore, the transmission destination computer 2(2Y) includes a reception number counting unit 202 that counts the number of receptions of the operation request packets received from the transmission source computer 2(2X), and an already-arrived packet information recording unit 203 that records information of the out-of-order packets (hereinafter, overtaking packets) arriving after overtaking unarrived operation request packets.

Each node of the parallel and distributed computing system 100 may be the transmission source computer 2(2X) or the transmission destination computer 2(2Y) for each communication.

Specifically, as illustrated in FIG. 8, a node 1 as the transmission source computer 2(2X) is provided with:
a "transmission number counting unit_2" of the operation request packets transmitted to a node 2;
a "transmission number counting unit_3" of the operation request packets transmitted to a node 3;
a "transmission number counting unit_4" of the operation request packets transmitted to a node 4; ...
a "transmission number counting unit_n" of the operation request packets transmitted to a node n.

Furthermore, a node 1 as the transmission destination computer 2(2Y) is provided with:
a "reception number counting unit_2" of the operation request packets received from a node 2;
a "reception number counting unit_3" of the operation request packets received from a node 3;
a "reception number counting unit_4" of the operation request packets received from a node 4; ...
a "reception number counting unit_n" of the operation request packets received from a node n.

Furthermore, the node 1 as the transmission destination computer 2(2Y) is provided with one already-arrived packet information recording unit for each reception number counting unit. That is, an "already-arrived packet information recording unit_2" is provided corresponding to the "reception number counting unit_2".

Then, in a case where the operation request packet is an out-of-order packet, the following processing is performed.

That is, in a case where the number of counts of the reception number counting unit 202 and the number of counts attached to the out-of-order packet are continuous, the transmission destination computer 2(2Y) processes the out-of-order packet and updates the number of counts of the reception number counting unit 202 with the number of counts attached to the out-of-order packet.

Furthermore, in a case where unarrived operation request packets are present, and the overtaking packet (out-of-order packet) is received, the transmission destination computer 2(2Y) processes the overtaking packet and records information on the overtaking packet in the already-arrived packet information recording unit 203 without updating the number of counts of the reception number counting unit 202. Then, the transmission destination computer 2(2Y) receives the unarrived operation request packets, and at a time point when there is no missing of the operation request packets and the count number to the overtaking packet is continuous, the reception number counting unit 202 adds the count number by the number up to the overtaking packet that has no unarrived earlier-sent packets, and the already-arrived packet information recording unit 203 discards the information of the overtaking packets that have no unarrived earlier-sent packets.

On the other hand, in a case where the operation request packet is an arrival order specified packet, the following processing is performed.

That is, in a case where the number of counts of the reception number counting unit 202 and the number of counts attached to the arrival order specified packet are continuous, the transmission destination computer 2(2Y) processes the arrival order specified packet and updates the number of counts of the reception number counting unit 202 with the number of counts attached to the arrival order specified packet.

Furthermore, in a case where unarrived operation request packets are present, and the number of counts of the reception number counting unit 202 and the number of counts attached to the arrival order specified packet are not continuous, the transmission destination computer 2(2Y) delays the processing of the arrival order specified packet of which the count number is not continuous or discards the arrival order specified packet of which the count number is not continuous and waits for retransmission in a correct order by retransmission. In the present embodiment, in order to eliminate the need for a buffer for delaying the processing of the arrival order specified packets of which the count numbers are not continuous, the transmission destination computer 2(2Y) discards the arrival order specified packets of which the count numbers are not continuous.

Next, an example in which a bit vector is used for the already-arrived packet information recording unit 203 will be described regarding a method of updating the number of counts of the reception number counting unit 202.

When a counter can be counted up in a state where there is no missing packet number using the bit vector, the counter and the bit vector are updated. A specific update method is as follows:

In a case where a 101st packet with a bit vector length of 8 bits is lost and a 102nd packet and a 103rd packet (overtaking packets) have arrived, a value of the counter is 100, and the bit vector is 00000110 in binary. That is, (102-100)th and (103-100)th bits from the lowest are set to 1.

When a 105th packet (overtaking packet) arrives here, the value of the counter remains 100, and the bit vector becomes 00010110 in binary. That is, a (105-100)th bit is set to 1.

In this state, when the 101st packet arrives, a (101-100)th bit is set to 1, and the bit vector becomes 00010111 in binary. Since 1 is set to the rightmost bit, this means the arrival of consecutive packets to the value of the counter, and this bit vector is shifted to the right until the rightmost bit becomes zero, and the number of shifts is added to the counter.

That is, since the number of shifts is 3, the value of the counter is 103, and the bit vector is 00000010 in binary. When a 104th packet arrives here, a (104-103)th bit is set to 1, the bit vector is 00000011 in binary, and as before, the value of the counter is 105 by adding 2, that is the number of 1s in a row, to the counter, and the bit vector is 00000000 in binary. The state in which the bit vector is all zero is a state in which there is no missing packet and the packet has arrived up to the value of the counter.

Alternatively, the following method may be used.

When it is assumed that the value of the counter is 105, and the bit vector is 00000000 in binary and a 106th packet has arrived (no disturbance in order), a (106-105)th bit of the bit vector is temporarily set to 1. At this time, since the value of the counter is 105, the bit vector is 00000001 in binary, and 1 is set in the rightmost bit of the bit vector, the bit vector is shifted to the right by 1bit, the value of the counter is +1 to 106, and the bit vector is 00000000 in binary.

In this method, it is possible to perform processing in the same manner as the procedure in a case where there is a missing without including a procedure for confirming that there is no disturbance in order.

Note that, in the above description, the 8-bit bit vector is used, but the present invention is not limited thereto. In a case where disturbance in order that exceeds a bit width of the bit vector occurs, a packet (overtaking packet) having a number exceeding the bit width of the bit vector is rejected to be retransmitted.

Next, a specific example will be briefly described.

In a write command for performing remote memory writing, in a case where out-of-order packets (out-of-order write packets (MBCF_WEAK_WRITE)) A, B, C, X, Y, and Z and arrival order specified packets (arrival order specified write packets (MBCF_WRITE)) F1 and F2 are transmitted from the transmission source computer 2(2X) in a transmission order of A, B, C, F1, X, Y, Z, and F2, F1 and F2 need to maintain the order of the preceding packets.

MBCF_WRITE of F1 and F2 cannot be executed unless all preceding operation request packets are processed. On the other hand, for example, in a case where MBCF_WEAK_WRITE of X, Y, or Z arrives after overtaking MBCF_WRITE of F1, the processing of MBCF_WEAK_WRITE of X, Y, or Z is executed, and the execution record is recorded in the already-arrived packet information recording unit 203.

### <Specific example of retransmission request of unarrived operation request packet>

In a case where there are unarrived operation request packets at the time of arrival of the operation request packet, the transmission destination computer 2(2Y) is configured to transmit a retransmission request of the unarrived operation request packets to the transmission side computer at a predetermined retransmission request timing.

### · Case of retransmission request upon arrival of out-of-order packet

Specifically, in a case where information on the overtaking packet is recorded in the already-arrived packet information recording unit 203, the transmission destination computer 2(2Y) can be set to transmit a retransmission request for unarrived operation request packets to the transmission side computer every time a predetermined retransmission request time (for example, about 100 µsec) set by a timer elapses. Furthermore, the transmission destination computer 2(2Y) can also be set to transmit a retransmission request for unarrived operation request packets to the transmission side computer at a time point when a predetermined number or more of information on overtaking packets are recorded in the already-arrived packet information recording unit 203.

### · Case of retransmission request upon arrival of arrival order specified packet

In a case where the number of counts of the reception number counting unit 202 and the number of counts attached to the arrival order specified packet are not continuous, the transmission destination computer 2(2Y) transmits a retransmission request for unarrived operation request packets to the transmission side computer at the time of the determination.

### <2. Effects of present embodiment>

According to the parallel and distributed computing system 100 of the present embodiment configured as described above, the transmission side process can transmit the arrival order specified packets and the out-of-order packets, and the transmission destination computer 2(2Y) performs the operation defined for each of the arrival order specified packets in a case where the plurality of arrival order specified packets arrives according to the transmission order, receives the plurality of out-of-order packets, and performs the operation defined for each of the out-of-order packets regardless of the arrival order of the plurality of out-of-order packets. Therefore, even in a state where there is no buffer for adjusting the arrival order of the packets in the transmission destination computer, it is possible to improve performance and suppress retransmission packets by relaxing the memory access order.

### <3. Modified embodiment>

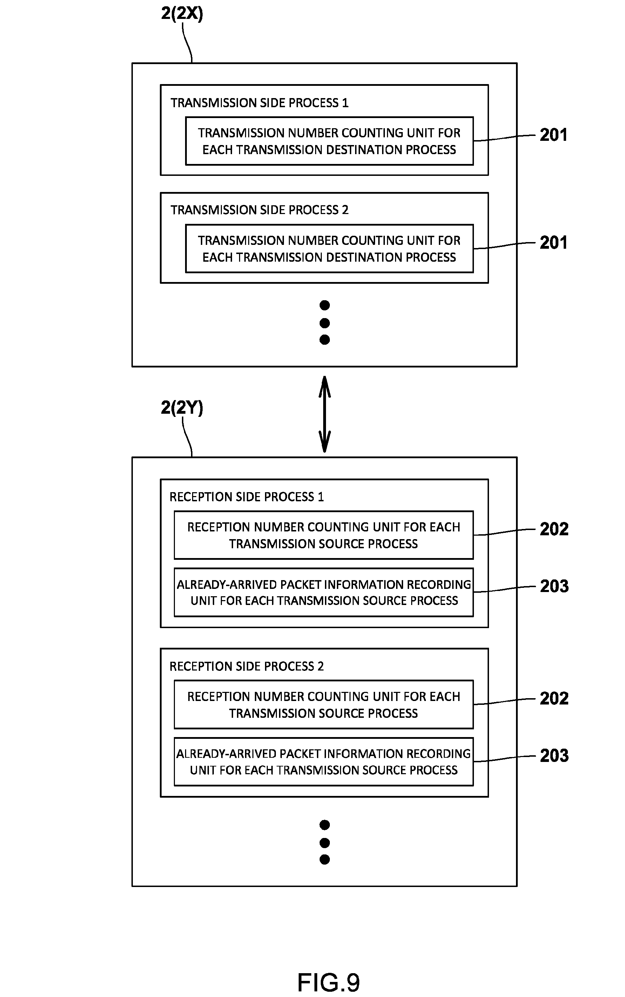

The above-described embodiment has a configuration (implementation in units of nodes) that the transmission source computer is provided with the transmission number counting unit for each transmission destination computer, and the transmission destination computer is provided with the reception number counting unit and the already-arrived packet information recording unit for each transmission source computer. However, as illustrated in FIG. 9, a transmission number counting unit for each transmission destination process of a transmission destination computer may be provided for each transmission side process, and a reception number counting unit and an already-arrived packet information recording unit for each transmission destination process may be provided for each transmission destination process (implementation in units of processes).

That is, essentially, since memory consistency is maintained by maintaining the order of the operation request packets to the reception side process of the specific transmission destination computer in the transmission side process of the specific transmission source computer, performing the order management of the operation request packets in units of nodes is expected to reduce the cost (labor and storage capacity) of the order management, but there is a risk of increasing the overhead cost by bringing an unnecessary order relationship between the operation request packets transmitted from different transmission side processes in the same node or between the operation request packets addressed to different reception side processes in the same node. Therefore, a parallel and distributed computing system that performs order management based on the packet transmission order not in units of nodes but in units of processes is also covered by the present patent.

In addition, the present invention is not limited to the above embodiments, and it goes without saying that various modifications can be made without departing from the gist of the present invention.

### Industrial Applicability

According to the present invention, in the memory-based communication facility (MBCF) that is one of communication and/or synchronization mechanisms based on the memory-based communication and/or synchronization scheme, by relaxing the memory access order, it is possible to improve performance and suppress retransmission packets.

### Reference Signs List

- 100: parallel and distributed computing system
- 2: computer
- 2X: transmission source computer
- 2Y: transmission destination computer
- 21: processor
- 22: physical memory
- 23: network interface controller (NIC)
- 3: data link
- 201: transmission number counting unit
- 202: reception number counting unit
- 203: already-arrived packet information recording unit

## Claims

1. A parallel and distributed computing system in which a plurality of computers including a processor including a translation look-aside buffer (TLB), a physical memory, and a network interface controller (NIC) directly accessible to the physical memory is interconnected via single data link or multiple data links,
wherein a process (hereinafter, a transmission side process) of a transmission source computer performs an operation request to an operation target process (hereinafter, a reception side process) that defines a process of a transmission destination computer, and transmits a plurality of operation request packets (hereinafter, an arrival order specified packet) that needs to arrive according to a transmission order,
the transmission destination computer receives a plurality of arrival order specified packets, and performs an operation defined for each of the plurality of arrival order specified packets in a case where the plurality of arrival order specified packets arrives according to the transmission order,
the transmission side process further performs an operation request to the reception side process, and transmits a plurality of operation request packets (hereinafter, an out-of-order packet) that does not need to arrive according to the transmission order, and
the transmission destination computer receives a plurality of out-of-order packets, and performs an operation defined for each of the out-of-order packets regardless of an arrival order of the plurality of out-of-order packets.

2. The parallel and distributed computing system according to claim 1, wherein the transmission side process transmits a plurality of operation request packets (hereinafter, an out-of-order write packet) that includes an identifier of the reception side process, an operation target address that defines a memory area of the reception side process, a data size to be written, and a data sequence, and does not need to arrive according to a transmission order, and
the transmission destination computer receives a plurality of out-of-order write packets, and stores the data sequence included in each of the out-of-order write packets in the memory area defined by the reception side process and the operation target address of each of the out-of-order write packets regardless of an arrival order of the plurality of out-of-order write packets.

3. The parallel and distributed computing system according to claim 1, wherein the transmission side process transmits a plurality of operation request packets (hereinafter, an out-of-order read packet) that includes an identifier of the reception side process, an operation target address that defines a memory area of the reception side process, a data size to be read, and a data storage area address of the transmission side process, and does not need to arrive according to a transmission order, and
the transmission destination computer receives a plurality of out-of-order read packets, reads a data string from the memory area defined by the reception side process and the operation target address of each of the out-of-order read packets regardless of an arrival order of the plurality of out-of-order read packets, and returns the data sequence to a data storage area of the transmission side process.

4. The parallel and distributed computing system according to claim 1, wherein in a case where there is an unarrived operation request packet at a time point of arrival of each of the operation request packets, the transmission destination computer transmits a retransmission request of the unarrived operation request packet to the transmission side process at a predetermined retransmission request timing.

5. The parallel and distributed computing system according to claim 1, wherein
the transmission source computer includes
a transmission number counting unit that counts a number of transmissions of all the operation request packets to be transmitted to the transmission destination computer and attaches a count number before or after counting-up to the operation request packets,
the transmission destination computer includes:
a reception number counting unit that counts a number of receptions of the operation request packets received from the transmission source computer; and
an already-arrived packet information recording unit that records information of an out-of-order packet (hereinafter, an overtaking packet) that has arrived after overtaking an unarrived operation request packet,
the transmission destination computer
performs processing of the out-of-order packet, and updates a number of counts of the reception number counting unit with a number of counts attached to the out-of-order packet in a case where the number of counts of the reception number counting unit and the number of counts attached to the out-of-order packet are continuous,
performs processing of the overtaking packet, and records information of the overtaking packet in the already-arrived packet information recording unit without updating the number of counts of the reception number counting unit in a case where the unarrived operation request packets are present and the overtaking packet is received,
and receives the unarrived operation request packets, and at a time point when there is no missing of the operation request packets and the count number to the overtaking packet is continuous, the reception number counting unit adds the count number by a number up to the overtaking packet that has no unarrived earlier-sent packets, and the already-arrived packet information recording unit discards information of the overtaking packets that have no unarrived earlier-sent packets.

6. The parallel and distributed computing system according to claim 5, wherein in a case where information of the overtaking packet is recorded in the already-arrived packet information recording unit, the transmission destination computer transmits a retransmission request for the unarrived operation request packets to the transmission side computer every time a predetermined retransmission request time set by a timer elapses.

7. The parallel and distributed computing system according to claim 5, wherein the transmission destination computer transmits a retransmission request for the unarrived operation request packets to the transmission side process at a time point when a predetermined number or more of information of the overtaking packet is recorded in the already-arrived packet information recording unit.

8. The parallel and distributed computing system according to claim 5, wherein
in a case where the number of counts of the reception number counting unit and the number of counts attached to the arrival order specified packet are continuous, the transmission destination computer performs the arrival order specified packet, and updates the number of counts of the reception number counting unit by the number of counts attached to the arrival order specified packet, and
in a case where the unarrived operation request packets are present, and the number of counts of the reception number counting unit and the number of counts attached to the arrival order specified packet are not continuous, the transmission destination computer delays processing of the arrival order specified packet of which the count number is not continuous, or discards the arrival order specified packet of which the count number is not continuous and waits for retransmission in a correct order by retransmission.

9. The parallel and distributed computing system according to claim 8, wherein in a case where the number of counts of the reception number counting unit and the number of counts attached to the arrival order specified packet are not continuous, the transmission destination computer transmits a retransmission request for the unarrived operation request packets to the transmission side process at a time point of determination of the case.

10. The parallel and distributed computing system according to any one of claims 1 to 9, wherein the transmission side process sets identification information indicating that each of the operation request packets is an operation request packet that needs to arrive according to a transmission order within the arrival order specified packet, and sets identification information indicating that each of the operation request packets is an operation request packet that does not need to arrive according to a transmission order within the out-of-order packet, and
the transmission destination computer identifies whether the operation request packet is the arrival order specified packet or the out-of-order packet on a basis of the identification information, and performs subsequent processing.
